# EUROPÄISCHE PATENTSCHRIFT

(11) **EP 2 228 199 B1**
(45) Veröffentlichungstag und Bekanntmachung des Hinweises auf die Patenterteilung: **06.05.2020**
(21) Anmeldenummer: 10000504.0
(22) Anmeldetag: 20.01.2010
(51) Int. Cl.: F16B 5/06, B29C 70/54, F16B 15/00, B29C 65/54, B29C 65/56, B29C 65/00, B29C 70/48, B29K 307/00

(54) **Verfahren zur Herstellung eines faserverstärkten Kunststoffbauteils**
Method for producing a fibre reinforced plastic component
Procédé de fabrication d'un composant plastique renforcé par des fibres

(30) Priorität: 24.02.2009 DE 102009010292
(43) Veröffentlichungstag der Anmeldung: 15.09.2010
(73) Patentinhaber: Bayerische Motoren Werke Aktiengesellschaft, 80809 München (DE)
(72) Erfinder: Heim, Bernhard, 84032 Landshut (DE)

(56) Entgegenhaltungen:
- WO-A2-2004/041528
- DE-A1- 4 106 888
- DE-A1-102007 023 308
- DE-B3-102008 039 223
- GB-A- 2 238 977
- GB-A- 2 245 862
- US-A1- 2003 190 455

## Beschreibung

Die vorliegende Erfindung betrifft ein Verfahren zur Herstellung eines faserverstärkten Kunststoffbauteils gemäß dem Oberbegriff des Patentanspruches 1.

Karosserieteile von Fahrzeugen können in Form faserverstärkter Kunststoffbauteile dargestellt werden. Für die Bauteilverstärkung werden üblicherweise mattenartige "Vorformlinge" bereitgestellt, deren Form der Form des herzustellenden Kunststoffbauteils bzw. einem Abschnitt des herzustellenden Kunststoffbauteils ähnelt. Für komplexere Bauteile werden üblicherweise mehrere derartige Vorformlinge benötigt. Für Anwendungen in der Flugzeugindustrie werden die Vorformlinge üblicherweise miteinander vernäht. Erwogen wurde auch, die Vorformlinge an den Überlappungsstellen miteinander zu verkleben. Eine Verbindung der einzelnen Vorformlinge in ihren Überlappungsbereichen ist einerseits für eine präzise Positionierung des "Gesamt-Vorformlings" im Injektionswerkzeug erforderlich. Andererseits wird dadurch verhindert, dass beim Injizieren flüssigen Harzes in das Werkzeug, die einander überlappenden Enden der Vorformlinge relativ zueinander verrutschen.

Die GB 2 238 977 A zeigt ein Verfahren zur Herstellung eines Verbundbauteils, wobei eine Mehrzahl von Schichten einander gegenüber gestellt werden, wobei jede Schicht Fasern mit einem hohen Elastizitätsmodul und eine homogene Harzmatrix aufweist, diese Schichten aneinander befestigt werden und diese Anordnung anschließend mit Druck und Hitze beaufschlagt wird, um das Harz auszuhärten.

Die DE 41 06 888 A1 beschreibt ein Sandwich-Bauteil mit einem aus Kunststoff bzw. Kunststoffschaum oder Styropor bestehenden Kern, der von einer Verstärkungsschicht aus Gewirken, Vliesen, Gelegen, Netzen oder dergleichen aus bruchfesten, faserförmigen Materialien, z.B. Glas, Karbon oder dergleichen umgeben ist.

Ein ähnliches Verfahren ist zudem aus der US 2003/190455 A1 bekannt.

Das Patentdokument GB 2 238 977 A offenbart ein Verfahren zur Herstellung eines faserverstärkten Kompositmaterials, bei dem zwei Kompositmaterialien mit einer Crimpmaschine verbunden werden.

Ein Vernähen der einander überlappenden Enden der Vorformlinge ist mit einem hohen Arbeitsaufwand verbunden und daher für Großserienproduktionen nur bedingt geeignet. Im Übrigen müssten die einander überlappenden Enden zum Vernähen von einer Oberseite und einer Unterseite her zugänglich sein bzw. zugänglich gemacht werden, was mit Aufwand verbunden ist.

Aufgabe der Erfindung ist es, ein Verfahren zur Herstellung faserverstärkter Kunststoffbauteile anzugeben, bei dem einander überlappende Enden von Vorformlingen in einfacher, kostengünstiger und großserientauglicher Weise miteinander verbunden werden können.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Ausgangspunkt der Erfindung ist ein Verfahren zur Herstellung eines faserverstärkten Kunststoffbauteils, insbesondere eines Karosserieteils, zu dessen Herstellung mindestens zwei faserverstärkte "Komponenten" verwendet werden. Bei den beiden "Komponenten" kann es sich um mattenartige vorgeformte Gebilde handeln, z.B. in der Form eines Gewebes, Gewirks o.ä. Die "Vorformlinge" können beispielsweise aus Kohlefasern, Glasfasern oder anderen geeigneten Fasermaterialien hergestellt sein. Die Fasern können ungerichtete Wirrfasern oder im Wesentlichen gleichmäßig gerichtet sein. Die mindestens zwei faserverstärkten Komponenten werden in einem Injektionswerkzeug (Resin-Transfer-Molding-Werkzeug) mit einer harzartigen Flüssigkeit umspritzt bzw. durchtränkt und anschließend ausgehärtet, wodurch sich ein im Wesentlichen steifes Kunststoffbauteil ergibt.

Der Kern der Erfindung besteht darin, die mindestens zwei faserverstärkten Komponenten vor dem Umspritzen bzw. Durchtränken in einem Bereich, in dem sie einander überlappen, mit mindestens einem Klammerelement "zusammenzuheften". Der Begriff "Zusammenheften" ist breit zu interpretieren, im Sinne von "provisorisch fixieren". Durch das Aneinanderheften der einander überlappenden Komponenten aus Fasermaterial wird verhindert, dass die einander überlappenden Bereiche in qualitativ maßgeblichem Umfang relativ zueinander verrutschen bzw. beim Injizieren der hartartigen Flüssigkeit relativ zueinander verschoben werden. Eine gewisse Relativbewegung der aneinander gehefteten Komponenten kann aber durchaus möglich und unter Qualitätsgesichtspunkten akzeptabel sein.

Für das Aneinanderheften können im Prinzip herkömmliche Klammern bzw. Klammergeräte, wie sie im Handel erhältlich sind, verwendet werden. Vorzugsweise werden Metallklammern mit "Sägeanschnitt" verwendet. Die Klammern können auch aus einem anderen geeigneten Material bestehen. Derartige Klammern sind in ihrer Ausgangsform U-förmig. Die freien Enden der beiden Klammerschenkel sind bezüglich der durch die Klammer gebildeten Ebene spiegelsymmetrisch angeschrägt, was dazu führt, dass beim Setzen der Klammer die Klammerschenkel sich ineinander entgegengesetzte Richtungen auseinander biegen.

Im Folgenden wird die Erfindung im Zusammenhang mit der Zeichnung näher erläutert.
- Figur 1: zeigt das Grundprinzip der Erfindung in schematischer Darstellung;
- Figur 2: zeigt eine Klammer mit Sägeanschnitt; und
- Figur 3: zeigt die Verformung der beiden Klammerschenkel einer Klammer mit Sägeanschnitt.

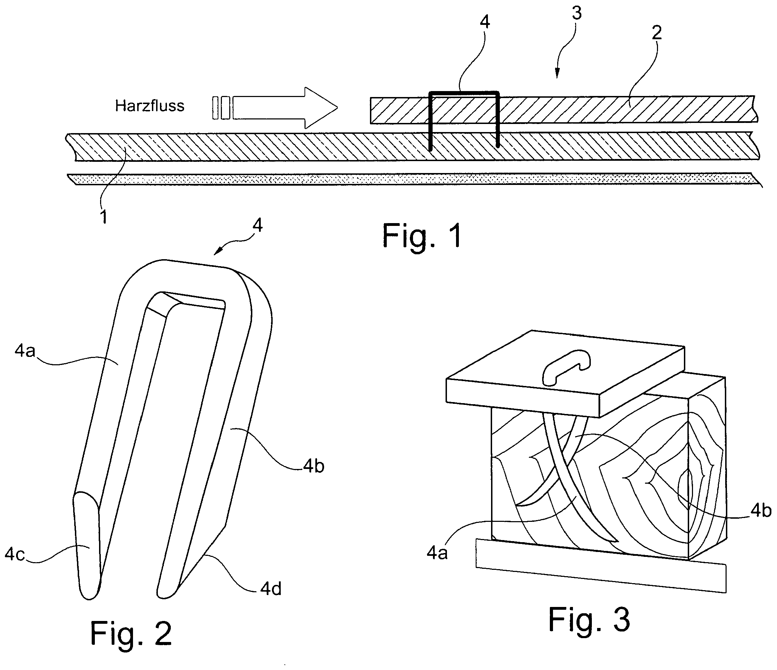

Figur 1 zeigt zwei Faserkomponenten 1, 2, die einander in einem Bereich 3 überlappen. Bei den Faserkomponenten 1, 2 kann es sich beispielsweise um einem herzustellenden Kunststoffteil in ihrer Form ähnelnde, vorgeformte, gewebeartige Vorformlinge handeln. Vor dem Umspritzen bzw. Durchtränken der Vorformlinge 1, 2 mit einer harzartigen Flüssigkeit werden diese mittels einer oder mehrerer Klammern 4 zusammengeheftet.

Die Vorformlinge für ein herzustellendes Kunststoffbauteil können vor dem Einbringen in ein Injektionswerkzeug auf einer "Vorkonfektionierstation" angeordnet und relativ zueinander ausgerichtet und zusammengeheftet werden. Die Vorkonfektionierstation kann durch einen hier nicht dargestellten "Urkörper" bzw. durch ein Formelement gebildet sein, auf den bzw. das die Vorformlinge 1, 2 aufgelegt und ausgerichtet werden, wobei sich Enden der Vorformlinge überlappen. Die Formfläche des Urkörpers, auf welche die Vorformlinge aufgelegt werden entspricht der Innenkontur eines Werkzeugteils des Injektionswerkzeugs, in dem später das Umspritzen erfolgt.

Aus Qualitätsgründen ist es erforderlich, dass die Vorformlinge exakt an der Formfläche des Urkörpers anliegen, da nur dann eine exakte "Nachbildung" der Soll-Kontur für den Klammerprozess erfolgt. Um ein exaktes Anliegen sicherzustellen werden die Vorformlinge mittels eines greifer-, rahmen- bzw. schablonenartigen Werkzeugs, das mittels eines Roboters bewegt werden kann, gegen die Formfläche des Urkörpers gedrückt bzw. gepresst. Das greifer-, rahmen- bzw. schablonenartigen Werkzeug kann in den Überlappungsbereichen der Vorformlinge mit Aussparungen versehen sein. Mittels eines Klammerwerkzeugs können die Vorformlinge in ihren Überlappungsbereichen durch die im greifer-, rahmen- bzw. schablonenartigen Werkzeug vorgesehen Aussparungen hindurch mittels Klammern 4 zusammengeheftet werden.

Anschließend kann der vorkonfektionierte, aus mehreren Einzelkomponenten zusammengesetzte Vorformling in das Injektionswerkzeug eingebracht und mit flüssigem Harz umspritzt bzw. durchtränkt werden. Die Klammern 4 stellen dabei sicher, dass die einzelnen miteinander verbundenen Vorformlinge weder beim Einbringen in das Injektionswerkzeug noch beim Einspritzen des Harzes relativ zueinander verrutschen können, zumindest nicht in einem die Bauteilqualität signifikant beeinträchtigenden Umfang. Die Klammern 4 halten die Vorformlinge jedenfalls in ihrem Überlappungsbereich zumindest so fest zusammen, dass sie auch beim Einspritzen von Harz unter hohem Druck nicht signifikant relativ zueinander verrutschen.

Figur 2 zeigt eine Klammer 4 mit Sägeanschnitt. In ihrem in Figur 2 dargestellten Ausgangszustand ist die Klammer 4 U-förmig gestaltet und weist zwei Klammerschenkel 4a, 4b auf. Die freien Enden der Klammerschenkel 4a, 4b sind bezüglich einer durch die Klammer 4 definierten Ebene keilartig angeschrägt und zwar spiegelsymmetrisch in Bezug auf die durch die Klammer 4 definierte Ebene. Aufgrund der angeschrägten Flächen 4c, 4d biegen sich beim Setzen der Klammer die beiden Schenkel 4a, 4b in einander entgegengesetzte Richtungen auseinander, was in Figur 3 dargestellt ist. Die Klammern verkrallen sich somit in der unteren "Preformlage".

Mit handelsüblichen Klammern und Klammerwerkzeugen lassen sich Vorformlinge schnell, prozesssicher und kostengünstig in ihren Überlappungsbereichen miteinander verbinden bzw. aneinander heften. Ein wesentlicher Vorteil gegenüber dem in der Luftfahrtindustrie angewandten Vernähen der Vorformlinge ist darin zu sehen, dass eine einseitige Bauteilzugänglichkeit zum Setzen der Klammern genügt.

## Patentansprüche

1. Verfahren zur Herstellung eines faserverstärkten Kunststoffbauteils, insbesondere eines Karosserieteils eines Fahrzeugs, wobei mindestens zwei Faserkomponenten (1, 2)
• bereitgestellt,
• so relativ zueinander angeordnet werden, dass sie sich zumindest in einem Teilbereich überlappen,
• mit einer harzartigen Flüssigkeit umspritzt bzw. durchtränkt und
• anschließend ausgehärtet
werden,
wobei die mindestens zwei Faserkomponenten (1, 2) in einem Injektionswerkzeug mit der harzartigen Flüssigkeit umspritzt bzw. durchtränkt werden und vor dem Umspritzen bzw. Durchtränken in ihrem Überlappungsbereich mit mindestens einem Klammerelement (4) mittels eines Klammerwerkzeugs zusammengeheftet werden, **dadurch gekennzeichnet dass**, beim Zusammenheften, die zwei Faserkomponenten (1, 2) mittels eines schablonenartigen Werkzeugs gegen eine Formfläche gepresst werden.

2. Verfahren nach Anspruch 1,
**dadurch gekennzeichnet, dass** die Faserkomponenten (1, 2) im Wesentlichen aus Kohlefasern bestehen.

3. Verfahren nach Anspruch 1 oder 2,
**dadurch gekennzeichnet, dass** die Faserkomponenten (1, 2) jeweils in eine einem Abschnitt des herzustellenden Kunststoffbauteils ähnelnde Vorform gebracht werden.

4. Verfahren nach einem der Ansprüche 1 bis 3,
**dadurch gekennzeichnet, dass** die Faserkomponenten (1, 2) in einem Werkzeug umspritzt bzw. durchtränkt werden und zuvor außerhalb des Werkzeugs oder im Werkzeug zusammengeheftet werden.

5. Verfahren nach einem Ansprüche 1 bis 4,
**dadurch gekennzeichnet, dass** das mindestens eine Klammerelement (4) aus Metall besteht.

6. Verfahren nach einem Ansprüche 1 bis 5,
**dadurch gekennzeichnet, dass** das Klammerelement (4) in seiner Ausgangsform U-förmig ist und freie Enden der beiden Schenkel (4a, 4b) des Klammerelements (4) in Bezug auf eine durch das Klammerelement (4) gebildete Ebene spiegelsymmetrisch angeschrägt sind.

## Claims

1. A method for producing a fibre-reinforced plastics-material component, especially a body part of a vehicle, wherein at least two fibre components (1, 2)
• are provided,
• are arranged in relation to each other such that they overlap one another at least in a partial region,
• are injection-moulded around or impregnated with a resin-like liquid and
• then are cured,
wherein the at least two fibre components (1, 2) are injection-moulded around or impregnated with the resin-like liquid in an injection mould and prior to the injection moulding-around or impregnation are stapled together in their region of overlap with at least one staple element (4) by means of a stapling tool, **characterised in that**, when being stapled together, the two fibre components (1, 2) are pressed against a forming face by means of a template-like tool.

2. A method according to Claim 1,
**characterised in that** the fibre components (1, 2) comprise substantially carbon fibres.

3. A method according to Claim 1 or Claim 2,
**characterised in that** the fibre components (1, 2) in each case are brought into a preform similar to a portion of the plastics-material component which is to be produced.

4. A method according to one of Claims 1 to 3,
**characterised in that** the fibre components (1, 2) are injection-moulded around or impregnated in a mould and prior to this are stapled together outside the mould or in the mould.

5. A method according to one of Claims 1 to 4,
**characterised in that** the at least one staple element (4) consists of metal.

6. A method according to one of Claims 1 to 5,
**characterised in that** the staple element (4) in its initial form is U-shaped and free ends of the two arms (4a, 4b) of the staple element (4) are chamfered mirror-symmetrically with regard to a plane formed through the staple element (4).

## Revendications

1. Procédé de fabrication d'un élément en un matériau synthétique renforcé par des fibres, en particulier d'une pièce de carrosserie d'un véhicule, selon lequel au moins deux composants renforcés par des fibres (1, 2) :
- sont préparés,
- sont positionnés l'un par rapport à l'autre, de sorte qu'ils se chevauchent dans au moins une zone partielle,
- sont enrobés par injection ou imprégnés avec un liquide de type résine puis,
- sont durcis,
les deux composants renforcés par des fibres (1, 2) étant enrobés par injection ou imprégnés avec un liquide de type résine dans un outil d'injection, et avant l'enrobage par injection ou l'imprégnation sont assemblés par agrafage dans leur zone de chevauchement avec au moins un élément d'agrafage (4),
**caractérisé en ce que**
lors de l'agrafage les deux composants renforcés par des fibres (1, 2) sont comprimés au moyen d'un outil en forme de gabarit contre une surface de mise en forme.

2. Procédé conforme à la revendication 1,
**caractérisé en ce que**
les composants renforcés par des fibres (1, 2) renferment essentiellement des fibres de carbone.

3. Procédé conforme à la revendication 1 ou 2,
**caractérisé en ce que**
les composants renforcés par des fibres (1, 2) sont respectivement introduits dans une préforme similaire à un segment de l'élément en matériau synthétique devant être obtenu.

4. Procédé conforme à l'une des revendications 1 à 3,
**caractérisé en ce que**
les composants renforcés par des fibres (1, 2) sont enrobés par injection ou imprégnés dans un outil et sont auparavant agrafés à l'extérieur de l'outil ou dans l'outil.

5. Procédé conforme à l'une des revendication 1 à 4,
**caractérisé en ce que**
l'élément d'agrafage (4) est réalisé en métal.

6. Procédé conforme à l'une des revendication 1 à 5,
**caractérisé en ce que**
l'élément d'agrafage (4) a initialement une forme de U et les extrémités libres des deux branches (4a, 4b) de l'élément d'agrafe (4) sont biseautées avec une symétrie de miroir par rapport à un plan formé par l'élément d'agrafe (4).
